# EUROPEAN PATENT APPLICATION

(11) **EP 2 023 090 A2**
(43) Date of publication of application: **11.02.2009**
(21) Application number: 08160095.9
(22) Date of filing: 10.07.2008
(51) Int. Cl.: G01C 21/36

(54) **Navigation apparatus and navigation program**

(30) Priority: 27.07.2007 JP 2007195499; 28.03.2008 JP 2008086458
(71) Applicant: Aisin AW Co., Ltd., Fujii-cho Anjo-shi, Aichi 444-1192 (JP)
(72) Inventor: KAWAUCHI, Hiroshi, Okazaki-shi Aichi 444-8564 (JP)
(74) Representative: TBK-Patent

(57) **Abstract**

In a navigation apparatus, destination data are narrowed down in accordance with an input search character string, for each of a plurality of search items. The resultant destination data narrowed down for each search item are stored in association with each search character string. Destination data included in common for all search character strings are extracted by performing a logical AND operation, and resultant extracted destination data are displayed as candidate destination points. A user is allowed to input search character strings in an arbitrary order the user wants, without concern for whether the search character strings are of a name, a genre, or an address.

## Description

### INCORPORATION BY REFERENCE

The disclosure of Japanese Patent Application No. 2008-086458 filed on March 28, 2008, including the specification, drawings and abstract thereof, is incorporated herein by reference in its entirety.

### BACKGROUND OF THE INVENTION

### 1. Field of the Invention

The present invention relates to a navigation apparatus, a navigation method and a computer program product, and more particularly, to a navigation apparatus, a navigation method and a computer program product, having/providing a capability of performing a search according to an input character string.

### 2. Description of the Related Art

In recent years, it has become very popular to use a navigation apparatus to guide a vehicle. The navigation apparatus has a function of searching for a route from a start point to a destination, a function of detecting a vehicle position by using GPS (Global Positioning System) satellites and/or a sensor such as a gyroscope sensor, a function of displaying the route to the destination and the current vehicle position on a map, and other functions. In general, the navigation apparatus has destination data each including data of a plurality of items such as names, genres, and addresses. If a location name, a building name, an address, a telephone number, and/or the like of a destination are input via a touch panel, candidate destinations are narrowed down according to the input data. When the search according to the input information such as the name or the genre is completed, extracted candidate destinations are displayed in the form of a list so that a user is allowed to select one of the candidate destinations. A further detailed description of such a navigation apparatus may be found, for example, in Japanese Unexamined Patent Application Publication No. 11-271084.

In the navigation apparatus described above, the destination search is performed according to an input destination name, a genre, and/or a location name (address). In the search process, it is required to specify whether the search is to be performed as to the name, the genre, or the location name. For example, if "Tokyo" is simply input without specifying the item for which the search is to be performed, it is difficult to determine whether "Tokyo" is a part of a destination name or a part of an address.

In the navigation apparatus, in the search on the basis of input character strings, it is possible to further narrow down candidates by selecting a genre or further inputting an address. However, the name search, the genre search, and the address search have their own different search screen. Therefore, to further narrow down the candidates according to a particular item, it is necessary to switch the search screen corresponding to the item. Thus, a user has to perform a troublesome operation in the search.

### SUMMARY OF THE INVENTION

In view of the above, it is an object of the present invention to provide a technique to efficiently input data necessary in searching for a destination without having to change the screen depending on the search item such as the genre, the name, etc.

According to a first aspect of the present invention, to achieve the above object, there is provided a navigation apparatus including a destination data storage unit adapted to store a plurality of destination data each including data of a plurality of search items, a character input unit for inputting a search character, a first narrowing-down unit adapted to retrieve the search character input from the character input unit for each of the plurality of search items, and store destination data corresponding to the search character in association with each search item, a second narrowing-down unit adapted to narrow down the destination data stored by the first narrowing-down unit in association with each search item, among the plurality of search items, a display unit adapted to display the destination data narrowed down by the second narrowing-down unit as candidate destinations, and a destination selection unit adapted to select one of the displayed candidate destinations.

According to a second aspect of the present invention, there is provided a navigation apparatus based on the first aspect, wherein the first narrowing-down unit is adapted to perform the narrowing down for each search item each time a character is input as a part of a search character string, and wherein the navigation apparatus further includes an explicitly indicating unit adapted to explicitly indicate a search item for which there is no destination data to be narrowed down for the search character string by the first narrowing-down unit.

According to a third aspect of the present invention, there is provided a navigation apparatus based on the second aspect, further including a search item selection unit adapted to select a search item, wherein if a search item is selected for the search character string, the first narrowing-down unit is adapted to narrow down the destination data within the range of the selected search item, and the explicitly indicating unit is adapted to explicitly indicate a search item for which there is no destination data to be narrowed down by disabling the selection of this search item.

According to a fourth aspect of the present invention, there is provided a navigation apparatus based on the first aspect, further including a search item selection unit adapted to select a search item, and the first narrowing-down unit may be configured such that if a search item is selected for the search character string, the first narrowing-down unit is adapted to narrow down the destination data within the range of the selected search item.

According to a fifth aspect of the present invention, there is provided a navigation apparatus based on the first aspect, further including a keyword storage unit adapted to store a plurality of keywords in association with each of the plurality of search items, a keyword display unit adapted to extract keywords including the input search character string from the keywords stored in the keyword storage unit, for each of the plurality of search items, and display the resultant extracted keywords, and a keyword selection unit adapted to select one of the displayed keywords, wherein the destination data storage unit is adapted to store a plurality of destination data including destination data to which one or more keywords are assigned for each search item, and if a keyword is selected, the first narrowing-down unit is adapted to narrow down the destination data to obtain destination data including the selected keyword.

According to a sixth aspect of the present invention, there is provided a navigation apparatus based on the fifth aspect, wherein the keyword display unit is adapted to narrow down the keywords for each search item each time a character is input as a part of a search character string, and wherein the navigation apparatus further includes a second explicitly indicating unit adapted to explicitly indicate a search item for which there is no keyword to be narrowed down for the search character string.

According to a seventh aspect of the present invention, there is provided a navigation apparatus based on the sixth aspect, further including a search item selection unit adapted to select a search item, wherein the keyword display unit is adapted to display keywords corresponding to the selected search item.

According to an eighth aspect of the present invention, there is provided a navigation apparatus based on the seventh aspect, wherein the second explicitly indicating unit is adapted to explicitly indicate a search item for which there is no keyword to be narrowed down by changing a state of the search item selection unit in terms of displaying the search item.

According to a ninth aspect of the present invention, there is provided a navigation apparatus based on the fifth aspect, wherein each keyword stored in the keyword storage unit is a word included in expressions of the plurality of destination data.

According to a tenth aspect of the present invention, there is provided a navigation apparatus based on one of fifth to ninth aspects, wherein the keywords are produced at least for two of items of a name, an address, and a genre, corresponding to contents of the destination data.
According to an eleventh aspect of the present invention, there is provided a navigation method comprising the steps of storing a plurality of destination data each including data of a plurality of search items; inputting a search character; retrieving the search character input for each of the plurality of search items, and storing destination data corresponding to the search character in association with each search item; narrowing down the destination data stored in association with each search item among the plurality of search items; displaying the destination data narrowed down as candidate destinations; and selecting one of the displayed candidate destinations.
According to a twelfth aspect of the present invention, there is provided a navigation method based on the eleventh aspect, wherein the retrieving is adapted to perform narrowing down for each search item each time a character is input as a part of a search character string, and wherein the navigation method further comprises a step of explicitly indicating a search item for which there is no destination data to be narrowed down for the search character string. According to a thirteenth aspect of the present invention, there is provided a navigation method based on the twelfth aspect, further comprising selecting a search item, wherein if a search item is selected for the search character string, the retrieving is adapted to perform narrowing down of the destination data within the range of the selected search item, and the explicitly indicating is adapted to explicitly indicate a search item for which there is no destination data to be narrowed down, by disabling the selection of this search item.
According to a fourteenth aspect of the present invention, there is provided a navigation method based on the eleventh aspect, further comprising selecting a search item, wherein if a search item is selected for the search character string, the retrieving is adapted to narrow down the destination data within the range of the selected search item.
According to a fifteenth aspect of the present invention, there is provided a navigation method based on the eleventh aspect, further comprising storing a plurality of keywords in association with each of the plurality of search items, extracting keywords including the input search character string from the keywords stored, for each of the plurality of search items, and displaying the resultant extracted keywords, and selecting one of the displayed keywords, wherein a plurality of destination data including destination data to which one or more keywords are assigned for each search item are stored, and if a keyword is selected, the retrieving is adapted to narrow down the destination data to obtain destination data including the selected keyword.

According to a sixteenth aspect of the present invention, there is provided a computer program product for a computer, comprising software code portions for performing a method based on any one of the eleventh to fifteenth aspect when the program is run on the computer.

As described above, the present invention provides a great advantage. That is, in the present invention, destination data corresponding to the search character string are narrowed down for each search item and the resultant destination data are stored in association with each search character string. Destination data which are included for all search items are then extracted. That is, the destination data are narrowed down among search items without having to change the search screen depending on the search item or without having to specify the search item. Thus, it becomes possible to input data necessary in the search in a highly efficient manner.

### BRIEF DESCRIPTION OF THE DRAWINGS

Fig. 1 is a block diagram illustrating a system configuration of a navigation apparatus according to an embodiment of the present invention.

Fig. 2 is a diagram illustrating an example of content of destination data (location information) stored in a destination data file.

Fig. 3 is a diagram illustrating examples of keywords stored in a keyword data file.

Fig. 4 is a schematic diagram illustrating an input apparatus and a display.

Fig. 5 is a flow chart illustrating a destination setting process.

Fig. 6 is a flow chart illustrating a process of displaying keywords in the form of keys.

Figs. 7A to 7H are schematic diagrams illustrating an example of a destination setting screen in various states.

Fig. 8 is a diagram illustrating an example of content of destination data (location information) stored in a destination data file in a navigation apparatus designed for use in English.

Fig. 9 is a diagram illustrating examples of keywords stored in a keyword data file in a navigation apparatus designed for use in English.

Fig. 10 is a schematic diagram illustrating an input apparatus and a display of a navigation apparatus designed for use in the USA.

Figs. 11A to 11H are schematic diagrams illustrating an example of a destination setting screen in various states in a navigation apparatus designed for use with English.

### DESCRIPTION OF THE PREFERRED EMBODIMENTS

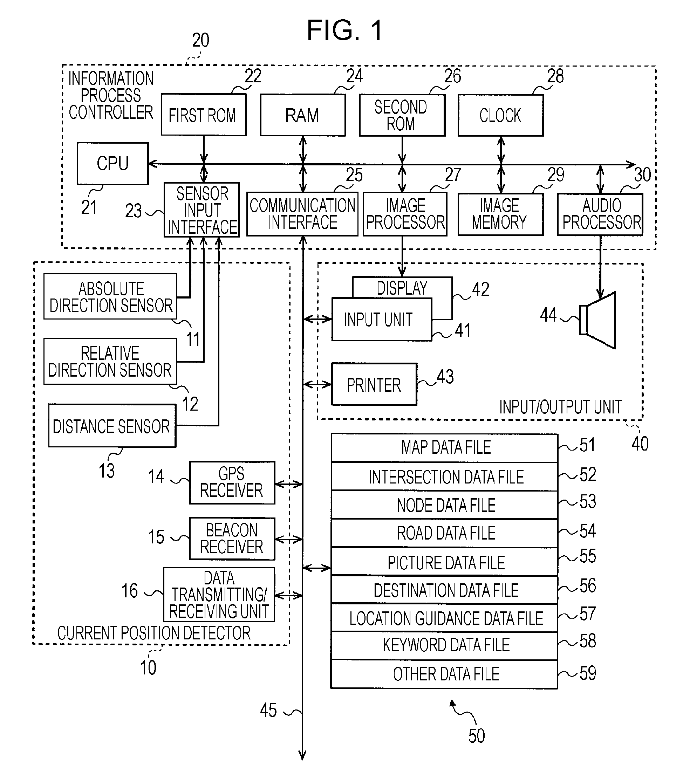

Embodiments of navigation apparatuses and navigation programs according to the present invention are described below with reference to Figs. 1 to 11.

### Overview of Embodiments

In an embodiment, each time a search character is input, destination data is narrowed down for each search item. The resultant destination data obtained as a result of the narrowing down process for each search item is stored in association with the corresponding search character strings. Thereafter, destination data which are included in common for all search character strings are extracted (by performing a logical AND operation), and resultant destination data are displayed as destination candidates. Thus, the searching can be accomplished simply by inputting information user thinks of in an arbitrary order with no concern for as to whether the information is of a name, genre, or address. For example, when searching is performed based on uncertain memory such as "a store whose name is probably "Hana", which is in a genre of a fast food shop, and which is located in Tokyo", it is not necessary to input data separately for each search item, such as "Hana" as a name, "Tokyo" as a location, and "fast food shop" as a genre, but it is sufficient to simply input "Tokyo", "fast food shop", and "Hana" as search character strings in an arbitrary order.

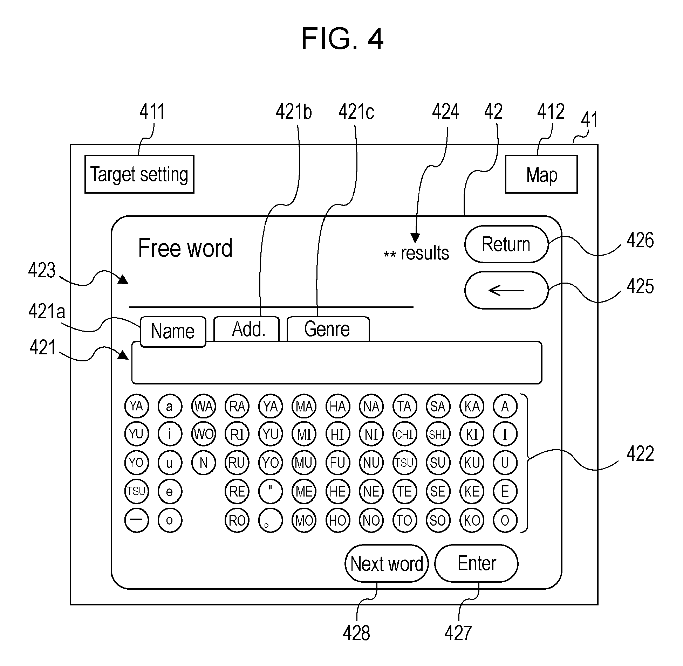

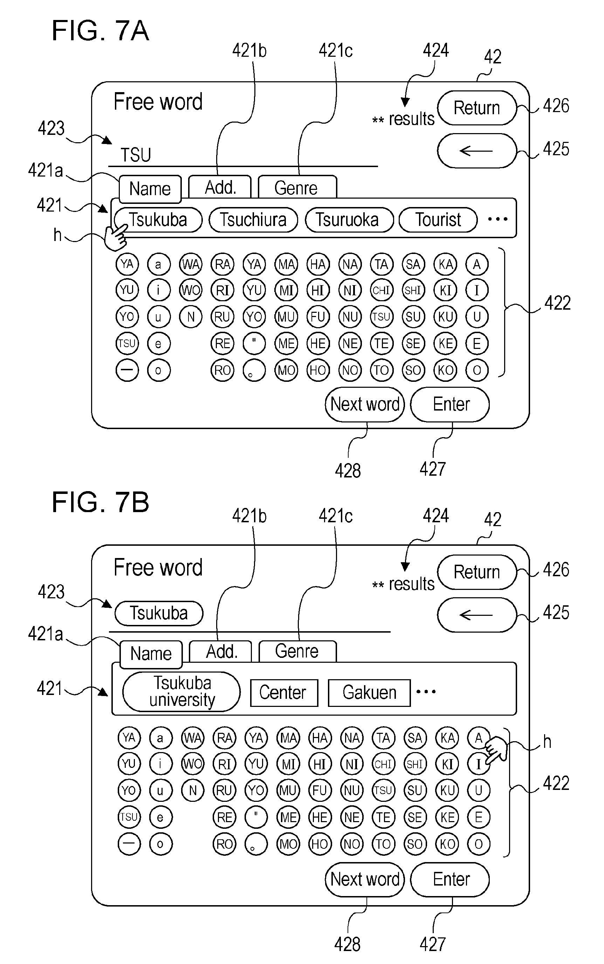

Furthermore, in the present embodiment, keywords are used to assist in inputting search characters thereby allowing the search characters to be input in a highly efficient manner. More specifically, in view of the fact that words subjected to the search in the navigation apparatus are limited to particular ones (such as names of locations), one or more words partially identical to a plurality of destination data are extracted as keywords and stored in a keyword data file. The keywords for use in the search are produced by extracting words which are included in common in the destination data, and resultant keywords are stored as keyword data. For example, "supermarket", "university", "information", "center", "land", "band", "amusement park", "golf", etc. each appearing as part in a plurality of location names are extracted as keywords. Note that in a case of an apparatus designed for use with the Japanese language such as that described below with reference to Fig. 4 and Figs. 7A to 7H, search characters are input using Japanese phonetic characters called kana characters, and kana-expressed words partially identical to the input search characters are extracted as keywords. A keyword for use in the search is assigned to each destination data subjected to the search process.

The keywords are produced for the respective search items (the destination name, the address, and the genre) and stored distinguishably in the keyword data file. In the assigning of keywords to the destination data, the keywords are assigned for each of search items (the destination name, the address, and the genre).

In the destination search, one or more keywords which partially match the input characters are retried, and keywords found as a result of the retrieval are displayed in the form of keyword selection keys so that a user can select a keyword simply by pressing one of the keys. For example, in a simplest case, only by inputting one character and selecting a key, it is possible to select a keyword (which may include three or more characters). Thus, a simplification of the inputting operation is achieved. In the present embodiment, the partial matching is used in the search. Alternatively, forward matching may be employed in the search.

The narrowing down of the destination data is performed as follows. On the basis of the input search character string, the destination data are narrowed down for each search item, and destination data including any of narrowed-down keywords are extracted. The logical OR (or the logical AND) of the narrowed-down data is determined and stored as candidate destination points. In a case where a keyword is selected, the narrowing down is performed only for a search item corresponding to the selected keyword such that the destination data are narrowed down using the selected keyword as a search character thereby to extract destination data including the selected keyword.

For each keyword stored in the keyword data file, keywords associated therewith are stored as related keywords thereby to make it possible to extract destination candidates on the basis of words which are not included in the name, the address, or the genre of destinations.

As described above, by providing keywords or related keywords based on the input character string for use in the destination search, it becomes possible to simplify the input operation and it also becomes possible to easily perform the search for a wide variety of destination candidates. Furthermore, by producing a keyword dictionary from navigation point information, it becomes possible to obtain very proper keywords for use in the destination search in the navigation.

### Detailed Description of the Embodiments

### First Embodiment

Fig. 1 is a block diagram illustrating a system configuration of a navigation apparatus according to an embodiment of the present invention. This navigation apparatus is designed to be installed in a vehicle, and includes, as shown in Fig. 1, a current position detector 10, an information process controller 20, an input/output unit 40, and an information storage unit 50. The current position detector 10 is configured as follows. An absolute direction sensor 11 is, for example, a geomagnetic sensor for detecting the direction of the vehicle on the basis of the north direction indicated by a magnetic needle. Note that the absolute direction sensor 11 is not limited to the geomagnetic sensor, but other direction sensors may be used as long as the absolute direction can be detected.

A relative direction sensor 12 is used, for example, to detect a turning movement at an intersection or the like. The relative direction sensor 12 may be implemented, for example, by an optical rotation sensor or a rotating variable resistor disposed on a rotating part of a steering wheel, or an angle sensor disposed on a wheel. Alternatively, a gyroscope sensor adapted to detect a change in angle based on an angular velocity or any other sensor may be used as long as it is possible to detect a change in angle with respect to a reference angle (absolute direction). A distance sensor 13 is a sensor adapted to detect a distance by detecting the rotation of a wheel or by integrating the acceleration twice. Alternatively, any other sensor may be used as long as it is possible to detect a distance traveled by the vehicle.

A GPS receiver 14 is a unit adapted to receive signals from satellites to acquire various kinds of information such as a signal transmission time, the position of the receiver, the moving speed of the receiver, the direction in which the receiver is moving, etc. A beacon receiver 15 is a unit adapted to receive signals transmitted from transmitters disposed at particular locations. In particular, the beacon receiver 15 is adapted to acquire VICS information indicating traffic/vehicle information such as congestion information, current position information, parking lot information. etc.

A data transmitting/receiving unit 16 is a unit adapted to communicate with an external apparatus via a telephone line or a radio wave to obtain information. The data transmitting/receiving unit 16 can be used for various purposes such as a mobile telephone, ATIS, VICS, GPS correction, intervehicle communication, etc, whereby it is possible to obtain/provide information about the vehicle running. The information process controller 20 is a unit adapted to perform calculations and control in accordance with information supplied from the current position detector 10 or the input/output unit 40 and/or information stored in the information storage unit 50. The result of the calculation is supplied to an output unit such as a display 42, printer 43 and/or a speaker 44.

The information process controller 20 is configured as follows. A central processing unit (CPU) 21 is a unit responsible for integrated control of various operations of the navigation apparatus. A first ROM 22 is a part in which a navigation program to detect the current position, search for a route, and provide navigation guidance is stored. A sensor input interface 23 is a unit adapted to receive information from the current position detector 10.

A RAM 24 is a part for storing information input via an input apparatus 41 such as information associated with a destination, passing points, etc., information indicating a result of a calculation performed by the CPU 21 in accordance with information input by a user, information indicating a result of route search, map information read from the information storage unit 50, etc. A communication interface 25 is a unit adapted to input/output information from/to the current position detector 10, and more particularly information obtained from the outside.

A second ROM 26 is a part in which a program associated with navigation and more particularly a program associated with voice guidance is stored. An image processor 27 is a unit adapted to convert vector information supplied from the CPU 21 into image information. A clock 28 is a unit adapted to tick to provide time information. An image memory 29 is a part for storing image information obtained as a result of the process performed by the image processor 27. An audio processor 30 is adapted to process audio information read from the information storage unit 50 and supply a result to the speaker 44.

The input/output unit 40 includes the input apparatus 41 used by a user to input data indicating a destination, a passing point, a search condition, etc., the display 42 for displaying an image, the printer 43 for printing information, and the speaker 44 for outputting a voice/sound. The input apparatus 41 is implemented, for example, by a touch panel disposed on the surface of the display 42, a touch switch, a joystick, or a key switch. The display 42 is adapted to display a map of an area around the current position, various kinds of operation screen, and a travel route to the destination.

The information storage unit 50 is connected to the information process controller 20 via a transmission line 45. The data/information stored in the information storage unit 50 includes a map data file 51, an intersection data file 52, a node data file 53, a road data file 54, a picture data file 55, a destination data file 56, a location guidance data file 57, a keyword data file 58, and an other-information data file 59. The information storage unit 50 is generally implemented by an optical storage medium such as a DVD-ROM or a CD-ROM or a magnetic storage medium such as a hard disk. Alternatively, other information storage media such as a magneto-optical disk or a semiconductor memory may be used.

In the map data file 51, stored are map data such as a road map of a whole country, road maps of respective areas, a house map, etc. Each road map includes various types of roads such as main highways, expressways, and narrow roads, and landmarks (facilities). The house map includes data representing outlines of buildings/houses and data indicating road names and the like. The narrow roads are roads which are smaller in width than national roads or prefectural roads, and which has no traffic control information such as that as to allowance only in one way.

The intersection data file 52 is a data file in which stored are data associated with intersections such as data indicating geographical position coordinates, data indicating intersection name, etc. The node data file 53 is a data file in which stored are geographic coordinate data of each node used in searching for a route on a map. The road data file 54 is a data file in which stored are data indicating positions, types, and the number of lanes or each road and data indicating connections between roads. The picture data file 55 is a data file in which stored are image data of various landmarks, sightseeing spots, main intersections, etc., to be used to provide visual information. The location guidance data file 57 is a data file in which stored are guidance data of various places, such as contents of guide signs disposed on roads, guidance of branch points, etc.

In the destination data file 56, stored are data about various landmarks, sightseeing spots, facilities, companies (which may be listed in a telephone directory), etc., selectable as the destination.

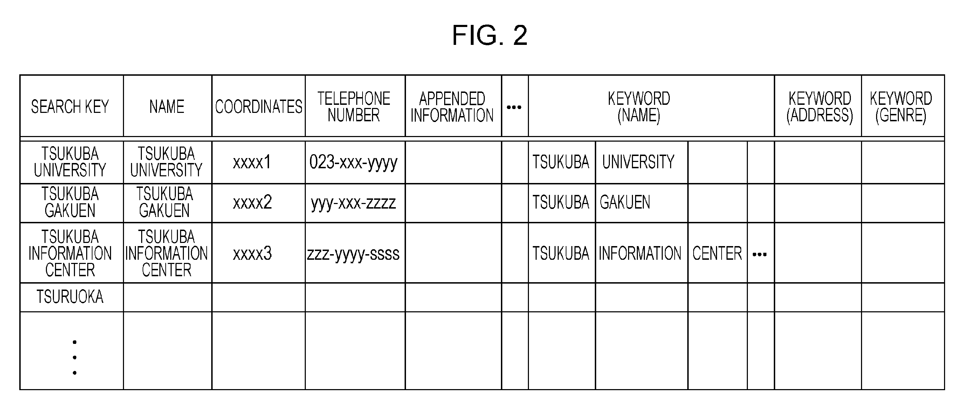

Fig. 2 is a diagram illustrating an example of content of destination data (location information) stored in the destination data file 56. As shown in Fig. 2, destination data includes search keys, names, coordinates, telephone numbers, appended information, and keywords according to the present embodiment. In the case of the navigation apparatus for use with Japanese, each search key is a string of phonetic characters (kana characters) indicating a "name" of a destination. In the present embodiment, the input apparatus 41 is implemented using Japanese syllabary keys adapted to input search keys expressed in kana characters. The coordinates are (x, y) coordinate information indicating the latitude and the longitude of each destination. The appended information is detailed data associated with each destination.

The keywords are stored for each search item (the name, the address, and the genre) distinguishably from each other. Each destination is assigned keywords of each item. For example, as for keywords associated with names, a destination "Tsukuba University" is assigned keywords "Tsukuba" and "University", and a destination "Kakudonal Tokyo Station Store" is assigned keywords "Kakudonal", "Tokyo Station", etc. Similarly, keywords of the other items, i.e., the address and the genre are stored for each destination. The genre is a hierarchical classification of each destination, such as "restaurant", "shopping/renting" "hotels", "sightseeing", and "vehicle-related facilities". The genre of "shopping/renting" includes, at lower levels thereof, "convenience stores", "supermarkets", "discount stores", "department stores", etc. Each destination is defined in advance to belong to one of genres, and data indicating the genre is stored.

If there is a short form or an alias for a destination, destination data may include such a short form or an alias may be employed as a keyword, even if the short form or the alias is not included in the name thereof. For example, when a destination name "Game Center Kogami Head office" is also called "GaCen" in short, "GaCen" may be employed as a keyword in addition to "Game Center", "Kogami", and "Head Office".

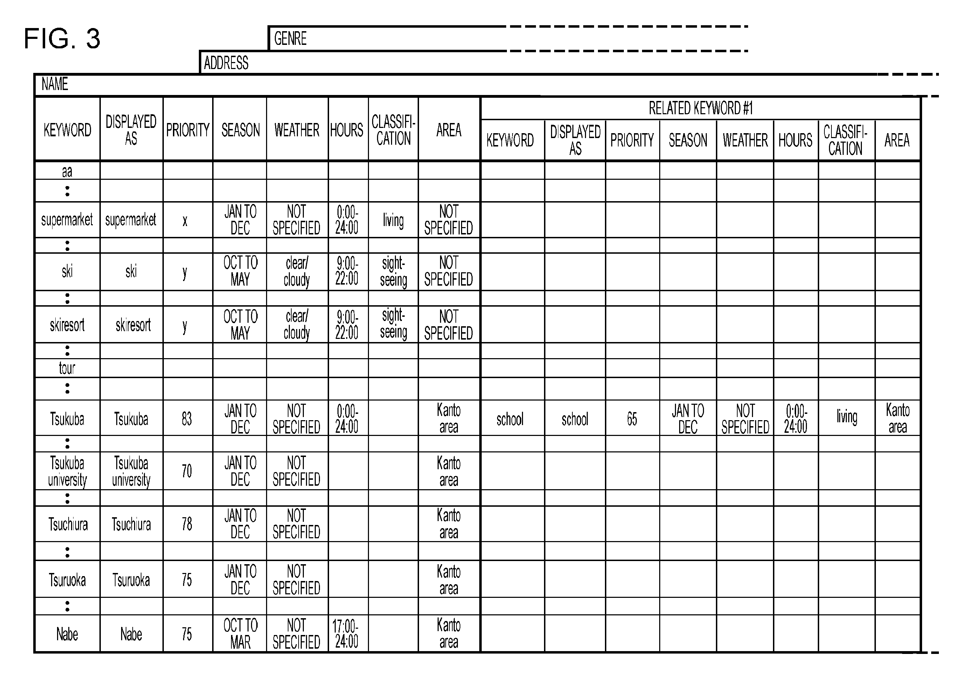

In the keyword data file 58 shown in Fig. 1, keywords are stored which are searched according to input characters. Fig. 3 shows examples of keywords stored in the keyword data file 58. As shown in Fig. 3, in the keyword data file 58, as in the destination data file 56, keywords of respective search items, i.e., name keywords, address keywords, and genre keywords are stored. Each keyword data includes a word (spelling) and a phonetic expression (kana expression) indicating a corresponding destination of destination data. A keyword is produced by extracting a word from the name or the address of each destination. In addition, for example, a short form or an alias such as "convenie" for "convenience store" or "GaCen" for "game center" may also be employed as a keyword, if such an expression is actually used.

In the present embodiment, as described in further detail later, spellings of keywords are extracted on the basis of an input string of phonetic characters, and resultant keywords are displayed in the form of input keys. Each keyword is assigned priority. The keywords obtained as a result of the narrowing down according to the input character string are displayed in the order according to the priorities assigned to the respective keywords. The priority is changed according to current conditions in terms of time, location, etc. More specifically, the priority is changed according to a season, weather, a time zone, etc. in which a destination is available, and according to the type of the destination, an area where the destination is located, etc. Each keyword has data defining the conditions according to which to change the priority, for each item. For example, candidate destinations including a "Nabe" in keyword are assigned priority of "75", and defined as being available in a season from "Oct to Mar". Therefore, if the current time is within this period, a predetermined value (for example, 3) is added to the normal priority "75", and thus the priority is changed to "78".

For some keywords, related keywords are defined. A word having a high probability of being input together with a keyword is employed as a related keyword for this keyword. For example, when "Gakuen" and "Center" are part of the name of a destination having an assigned keyword "Tsukuba", "Gakuen" and "Center" are employed as related keywords.

In the present embodiment, when a user selects one of keywords obtained as a result of the narrowing-down according to an input character string, related keywords associated with the selected keyword are displayed as next selection candidates (input candidates) in the form of keys. Related keywords are also displayed in addition to keywords in a case where the total number of keywords obtained as a result of the narrowing-down for an input character string is smaller than a predetermined number (for example, a maximum number of keywords which can be displayed on the display screen at a time). As shown in Fig. 3, for each related keyword, as with the keywords, the priority, the conditions according to which to change the priority such as the season, the weather, the time zone, etc, in which a destination is available, the type, the area, etc, are defined as required. The related keywords are stored as keywords in each corresponding destination data, and thus the related keywords are treated in the same manner as the keywords.

In the present embodiment, keywords and related keywords are employed as words which should be met in the logical AND operation in narrowing down the candidate destinations. For example, when both a keyword A and a related keyword B are selected, destination data having both keywords A and B are extracted. Similarly, the logical AND operation is performed among keywords and related keywords of the respective items of name, address, and genre in narrowing down the destination data.

The navigation apparatus configured in the above-described manner provides route guidance as follows. The navigation apparatus detects the current position using the current position detector 10, reads map information of an area around the detected current position from the map data file 51 stored in the information storage unit 50, and displays the map on the display 42. If a destination is set via a destination setting process which will be described later, the information process controller 20 searches for a plurality of routes from the current position to the specified destination and displays the plurality of routes on the map on the display 42. If a driver selects one of the routes, the information process controller 20 stores the selected travel route in the RAM 24 thereby acquiring the travel route (using a travel route acquisition unit).

The information process controller 20 may transmit data indicating the vehicle current position (or an input starting point) and the destination to an information processing center and may receive data indicating a route to the destination from the information processing center thereby acquiring the travel route. In this case, the data indicating the destination or the travel route is wirelessly transmitted via a communication interface 25.

If the vehicle starts running, the current position is monitored using the current position detector 10, and route guidance is provided according to the detected current position. More specifically, the route guidance is provided as follows. The vehicle position on the map is determined according to map matching between road data corresponding to the detected travel route and the current position detected by the current position detector 10. The map around the detected current position is displayed on the display 42, and the travel route and the current position are displayed on this map. Thereafter, a determination is made repeatedly according to the current position on the planned travel route as to whether any guidance should be provided. If it is determined that route guidance should be provided, route guidance is provided on the display 42 or via voice. For example, information is provided to inform the driver that the driver should drive the vehicle straight a particular distance, should make a turn at a particular point, etc., or information indicating a direction in which to drive the vehicle is provided.

Next, the destination setting process according to the present embodiment is explained. Fig. 4 illustrates the input apparatus 41 and the display 42. As shown in Fig. 4, a destination setting screen, a map around the current position, and other various kinds of menu screens are displayed on the display 42. The display has a touch panel disposed on the display screen thereof whereby a user is allowed to perform pointing by directly touching the touch panel with a finger. A fixed frame of the input apparatus 41 is disposed around the external edge of the display 42. In an upper area of the fixed frame, disposed are a destination setting key 411 implemented by a physical push button (hard key), and a map key 412 used to display a map screen of an area around the current position.

The destination setting key 411 is a key used to display the destination setting screen for setting a destination, a passing point, and the like. If this destination setting key 411 is selected, the destination setting process according to the present embodiment is performed. The destination set via the destination setting process according to the present embodiment is used when the route search is performed and also when the determined destination or destination candidates in an area around the current position are displayed on the map screen.

The specific example of the display 42 shown in Fig. 4 is in a state in which the destination setting screen is displayed thereon. The destination setting screen includes a keyword field 421, an input keyboard 422, an input character field 423, a number-of-candidates field 424, a back key 425, a return key 426, an enter key 427, and a next word key 428. The keyword field 421 is a field in which keywords (including related keywords) narrowed down according to an input character string are displayed. Note that in the keyword field 421, the keywords are displayed in the form of input keys. If any input key is touched, a keyword corresponding to the touched input key is selected. Keywords and related keywords are displayed in a distinguishable manner. Note that actually there are a plurality of keyword fields 421 for displaying name keywords, address keywords, and genre keywords, which can be selected by selecting a name tab 421a, and address tab 421b, and a genre tab 421c, respectively. If a tab is selected, a keyword field 421 corresponding to the selected tab is displayed in a highest level, and keywords are displayed in this keyword field 421. In the present embodiment, when there is no destination data obtained as a result of the narrowing down according to the search character string and the keyword, a corresponding tab (which is one of the tabs 421a to 421c) is brought into a selection disabled state. If a tab is brought into the selection disabled state, the tab is deleted or displayed with a low intensity in order to explicitly indicate the fact that the tab is in the selection disabled state (first and second explicitly indicating unit).

The input keyboard 422 includes a plurality of keys for inputting characters. In the case of the version for use in Japanese, the input keyboard 422 is configured so as to be capable of inputting Japanese phonetic characters, i.e., kana characters. Although the input keyboard 422 shown in Fig. 4 and Figs. 7A to 7H include keys each labeled a Roman character, each actual key is labeled a Japanese kana character, and characters displayed in the input character field 423 are expressed in Japanese kana characters, while keywords displayed in the keyword field 421 are expressed in Japanese kanji characters or a combination of kanji characters and kana characters. The input keyboard 422 may additionally include numeric keys and/or function keys. The input character field 423 is a field in which characters input via the input keyboard 422 and a keyword selected in the keyword field 421 are displayed. The input characters and the keyword are displayed in a distinguishable manner. The number-of-candidates field 424 is a field in which to display the number of candidate destinations (destination data) extracted as a result of the narrowing down according to the input characters displayed in the input character field 423 or the keyword. The back key 425 is used when a correction is made for an input character or a selected keyword. The return key 426 is used to make a return to a state previous to a last operation. The enter key 427 is used to display candidate destination points obtained as a result of narrowing down based on input characters or a selected keyword.

The next word key 428 is used to complete the inputting of search characters. If this next word key 428 is pressed, characters already input and displayed in the input character field 423 are fixed and specified as a final complete search character string, and it becomes possible to start inputting another new search character string. That is, if the next word key 428 is pressed, no keywords displayed in the keyword field 421 are selected, and the narrowing down of candidate destination points is performed only based on the search characters. More specifically, when the next word key 428 is selected, destination data are narrowed down for each search item (the name, the address, and the genre) using characters displayed in the input character field 423 as of when the next word key 428 is selected as search characters (excluding the selected keyword and other already fixed search character strings), and a logical OR (or AND) thereof is stored as a result of the narrowing down based on the search characters.

On the destination setting screen, as shown in Fig. 4, the input character field 423 is labeled "Free Word" to indicate that this input character field 423 can be used not only to simply input a destination name but also to freely input any keyword or related keyword.

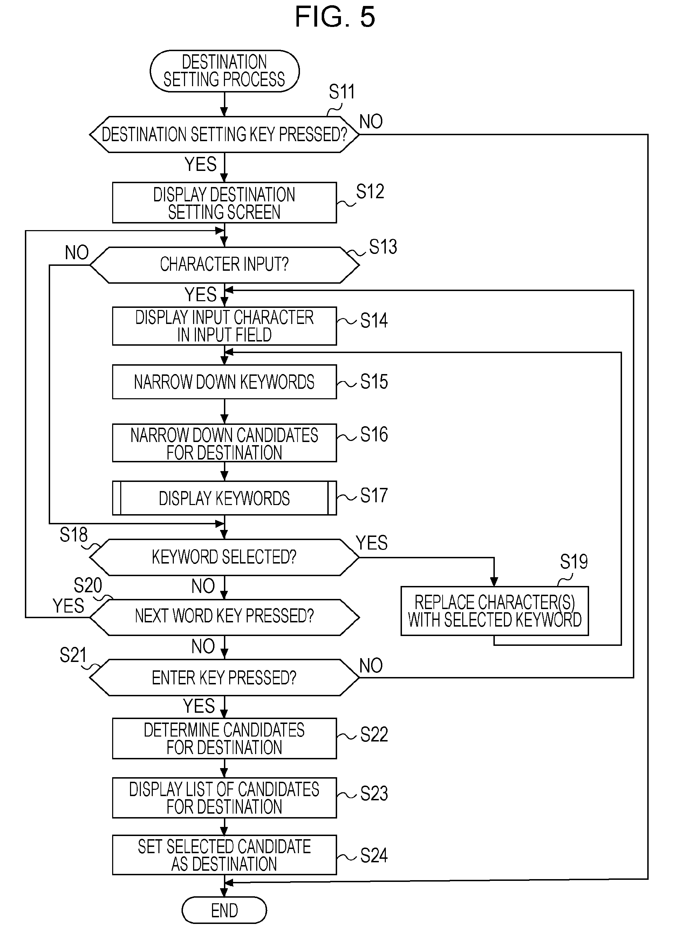

Fig. 5 is a flow chart illustrating a destination setting process. For simplicity, the flow chart shown in Fig. 5 does not include a process which will be performed when the back key 425 or the return key 426 is pressed in the middle of the destination setting process. It is allowed to press the back key 425 or the return key 426 at any time before the enter key 427 is pressed. The back key 425 is used to correct an already input character, and the return key 426 is used to return to an immediately previous operation. These processes may be accomplished by routine programs.

The information process controller 20 monitors whether the destination setting key 411 is pressed (selected) by a user (step 11). If pressing of the destination setting key 411 is detected (Yes in step 11), the information process controller 20 displays the destination setting screen shown in Fig. 4 (step 12), and the information process controller 20 monitors whether a character is input via the input keyboard 422 (step 13). If inputting of a character is detected (Yes in step 13), the information process controller 20 displays the input character in the input character field 423 (step 14), and the information process controller 20 extracts, from all keywords stored in the keyword data file 58, keywords which partially match the character (character string) displayed in the input character field 423 (step 15). The keyword extraction is performed separately for the names, the addresses, and genres, and the extracted keywords are stored in predetermined storage areas of the RAM 24.

The information process controller 20 narrows down candidate destination points according to the input characters displayed in the input character field 423 and the keywords extracted as a result of the narrowing described above. The information process controller 20 stores the resultant candidate destination points in the RAM 24 and displays the number of candidate destination points in the number-of-candidates field 424 (step 16). The narrowing down of the candidate destination points based on the input characters is performed by determining search keys (readings of names, see Fig. 2) which partially match the input character(s) (one or more characters) displayed in the input character field 423. On the other hand, the narrowing down based on the keywords is performed by determining destination data including any one of the keywords obtained as a result of the narrowing performed in step 15. The set of destination data obtained as the result of the narrowing based on the input characters and the set of destination data obtained as the result of the narrowing based on the keywords are combined by performing the logical OR operation, and a resultant set of destination data included in any one of the data sets is stored as a result (as of the present stage) of narrowing down based on the input characters and the keywords (that is, as candidate destination points) in the RAM 24. In the example described above, the narrowing down is performed by the logical OR operation.
Alternatively, the narrowing down may be performed by the logical OR operation or a logical AND operation as specified by a user. In this case, destination data which include all selected keywords are extracted as a result as of the present stage of the narrowing process, and the result is stored in a particular storage area of the RAM 24.

At a stage where a first character of the search characters is input, the narrowing down of the candidate destination points is performed for the destination data file 56, and, in the narrowing process performed thereafter, the candidate destination points stored in the RAM 24 are further narrowed down. In the narrowing process performed on the candidate destination points stored in the RAM 24, candidate destination points which are not selected are deleted from the RAM 24. Instead of all destination data of candidate destination points obtained as a result of the narrowing down in the RAM 24, only IDs of the destination data may be stored in the RAM 24. In this case, the narrowing-down for the candidate destination points stored in the RAM 24 is performed while referring to the data stored in the destination data file 56 according to the IDs.

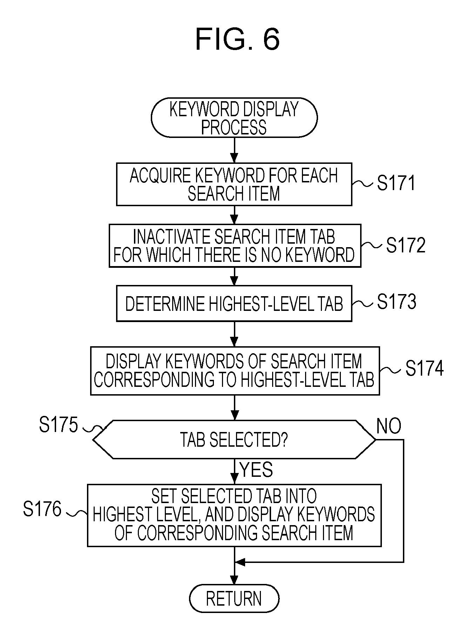

Next, the information process controller 20 performs a keyword key display process to display the keywords obtained as the result of the narrowing in the form of selectable keys in the keyword field 421 (step 17). Fig. 6 is a flow chart illustrating details of the process of displaying the keywords in the form of keys. First, the information process controller 20 acquires keywords narrowed down in step 16 for each search item (step 171).

The information process controller 20 determines whether there is a search item having no keyword obtained as a result of the narrowing down (that is, a search item having no keyword corresponding to the input characters). If there is such a search item, a tab (one of the tabs 421a to 421c) corresponding to that search item is deleted (step 172). More specifically, the tab of the search item having no keyword corresponding to the input character(s) is deleted so as to explicitly indicate that the search item has no keyword, and thus to disable the selection of this tab. Note that the deleting refers to explicitly indicating the fact that the search item has no keyword, and the corresponding tab may or may not be completely deleted as long as the fact is explicitly indicated. For example, the tab may be displayed in a low-intensity fashion, a reverse fashion, or in a different color. In the example described above, the tab is deleted and the selection of the tab is disabled. Alternatively, only the explicit indication of the fact that the search item has no keyword may be performed, and the tab may be maintained enabled. In this case, when this tab is selected, no keyword is displayed in the keyword field 421 because the search item has no keyword.

Next, the information process controller 20 determines which tab should be displayed in a highest level (step 173). In the present embodiment, when keywords of respective search items are displayed for the first time, that is, when a first search character is input, the name tab 421a is set to be in the highest level by default. Thereafter, if a tab is selected, this tab is set to be in the highest level and is maintained in the highest level until another tab is selected or another search character is newly input (until a keyword is selected or a next word is selected).

Next, the information process controller 20 displays keywords of the search item corresponding to the tab set to be in the highest level in the keyword field 421 of this tab in the form of keys usable to select a keyword (see Fig. 3) (step 174). That is, keywords which partly match the input character(s) or the selected keyword are extracted as a result of the narrowing and displayed in the keyword field 421 in the form of keys. In a case where the number of keywords extracted as the result of the narrowing is smaller than a predetermined value, keywords related to the extracted keywords may also be displayed.

In this step 174, when the information process controller 20 displays the keywords obtained as the result of the narrowing down in the keyword field 421, the information process controller 20 changes the priority of each keyword according to the present situation (in terms of the season, the weather, the time, the type, the area, etc.), and the information process controller 20 displays the keywords in the keyword field 421 in the descending order of the resultant changed priority. Note that the displaying of the keywords in the form of keys refers to displaying of the keywords such that the displayed keywords are selectable. More specifically, in the present embodiment, the information process controller 20 monitors whether the touch panel is pressed (touched) at a position corresponding to one of the displayed keywords. If touching is detected, the information process controller 20 determines that a keyword at the touched position has been selected.

Next, the information process controller 20 determines whether one of the tabs 421a to 421c has been selected (touched) (step 175). If it is determined that no tab has been selected (No in step 175), the processing flow returns to the destination setting process shown in Fig. 5. In a case where it is determined that one of the tabs 421a to 421c has been selected (Yes in step 421), the information process controller 20 displays the selected tab in the highest level and displays the keywords of the corresponding search item in the form of keys (step 176). Thereafter, the processing flow returns to the destination setting process shown in Fig. 5.

Referring again to Fig. 5, after the displaying of the keywords in the form of keys (step 17), the information process controller 20 monitors the occurrence of next inputting (selection) (steps 18, 20, and 21). If one of the keywords displayed in the keyword field 421 is selected (Yes in step 18), the information process controller 20 replaces the input characters displayed in the input character field 423 with the selected keyword (step 19). In this case, if another keyword has already been displayed in the input character field 423 as a result of a previous operation, this keyword is replaced with the newly selected keyword. In order to distinguish the keyword from the input characters, the keyword is displayed in the input character field 423 in a form enclosed in a box.

After the displaying of the selected keyword in the input character field 423, the information process controller 20 returns the process to step 15 to repeat the narrowing of the selected keywords (step 15) and the narrowing of the candidate destination points (step 16). In step 15 after step 19, the keyword narrowing is performed for the keywords obtained as a result of the previous narrowing process (in step 15 after step 14) and stored in the RAM 24 to obtain keywords including the selected keyword. Keywords which are not included in the extracted keywords are discarded.

For example, in a state in which keywords "Tsukuba", "Tsuchiura", "Tsuruoka", and "tourist" are displayed in the keyword field 421 of the name tab 421a, if the keyword "Tsukuba" is selected, then keywords including the selected keyword "Tsukuba", i.e., "Tsukuba" and "Tsukuba University" are extracted, and the other keywords "Tsuruoka", "tourist", etc. are deleted from the RAM 24.

Subsequently, the information process controller 20 narrows down the candidate destination points stored in the RAM 24 according to the selected keyword (step 16). More specifically, the information process controller 20 narrows down the candidate destination points by using the reading of the selected keyword as the search characters. In this case, the narrowing is performed for the search item corresponding to the tab of the selected keyword, and the other search items are deleted without being subjected to the narrowing process. In the example described above, the phonetic spelling "tsukuba" (expressed in Japanese kana characters) of the selected keyword "Tsukuba" (expressed in Japanese kanji characters) is employed as the search characters, and the narrowing is performed for the candidate destination points which correspond to the search item "name" and which are stored in the RAM 24, while the candidate destination points corresponding to the other search items "address" and the "genre" are deleted from the RAM 24. Subsequently, the information process controller 20 narrows down the candidate destination points according to the narrowed keywords (the "Tsukuba" and "Tsukuba University) in the above-described example). In this narrowing process, as in the process according to the search characters, the narrowing is performed for the search item corresponding to the tab of the selected keyword. After the narrowing of the candidate destination points (step 16), the keywords obtained as a result of the narrowing in step 15 are displayed in the form of keys (step 17).

In a case where no keyword is selected (No in step 18), but the next word key 428 is selected (Yes in step 20), the information process controller 20 fixes the characters displayed in the input character field 423 (excluding the selected keyword and other already fixed search character strings) as the final search character string. The processing flow then returns to step 13 to monitor the occurrence of inputting a character as a next search character. As a result of the determination of the final search characters, the candidate destination points (destination data) sequentially narrowed down in step 16 in accordance with the search characters and stored in the RAM 24 are determined as final candidate destination points corresponding to the final search characters.

In a case where no keyword is selected and the next word key 428 is not pressed (No in step 18 and No in step 20), but a character is input (No in step 21), then the information process controller 20 returns the process to step 14 to repeat the process from step 14 to display the input character. Note that in this state, the input characters displayed in the input character field 423 are not yet determined as the final search characters.

In a case where the enter key 427 is selected (Yes in step 21), the information process controller 20 determines final candidate destination points from the candidate destination points (destination data) narrowed in step 16 and stored for respective keywords and for respective search character strings in the RAM 24. More specifically, candidate destination points are narrowed down in step 16 each time a keyword is selected (Yes in step 18) and each time a final search character string is determined (Yes in step 20), and the resultant candidate destination points are stored in the RAM 24 separately for the respective keywords and search character strings. The information process controller 20 extracts, from the data stored in the RAM 24, destination data which are included for all items corresponding to the keywords and the search character strings, by determining the logical AND of the destination data of the candidate destination points, thereby determining the final candidate destination points (step 22).

The destination data are displayed as final candidate destination points in the form of a list on the display 42 (step 23). In the displaying of the destination data as the candidate destination points, highest priority is given to destination data having keywords. Among destination data having keywords, the destination data are displayed in the descending order of priority assigned to the keywords. The priority may be determined in various manners. For example, the priority may be determined in accordance with the alphabetically order or the order of the Japanese syllabary, in the order of locations starting from the closest to the current position to the farthest, or in the order of parameters selected by a user.

Thereafter, if the user selects one of the candidate destination points displayed on the display 42, then the information process controller 20 sets the selected candidate destination point as a destination (step 24), and the information process controller 20 stores the corresponding destination data in a predetermined storage area of the RAM 24. Thus, the process is completed.

The state of the display screen changes with the progress of the above-described destination setting process according to the present embodiment, as described below with reference to Figs. 7A to 7H. On the destination setting screen shown in Fig. 4, if a character "TSU" (actually, a corresponding one of Japanese kana characters) is input via the input keyboard 422 (Yes in step 13), then a character "TSU" is shown in the input character field 423 as shown in Fig. 7A (step 14). Keywords which partially match the input character "TSU" are extracted for each of the search items "name", "address", and "genre" (step 15). For example, for the search item of name, keywords (names) "Tsukuba", "Tsuchiura", "Tsuruoka", "tourist" (including "TSU" when expressed in Japanese kana characters), etc. which partially match the input character "TSU" are extracted.

The input character "TSU" is employed as a search character, and destination data are narrowed down according to the search character for each of the search items, name, address, and genre. The destination data are further narrowed down according to each keyword for each of the search items (step 16).

The keywords obtained as a result of the narrowing are displayed in the form of keys (step 17). In this specific case, the input character is a first input character, and thus the name tab 421a is set to be in the highest by default (step 173), and "Tsukuba", "Tsuchiura", "Tsuruoka", "tourist", and so on expressed in Japanese kanji characters corresponding to the keywords (names) of "Tsukuba", "Tsuchiura", "Tsuruoka", "tourist", etc. expressed in Japanese kana characters are displayed in the keyword field 421 of the name tab 421a (step 174). Herein, it is assumed that there are keywords including, as part, the input character "TSU" for all search items of name, address, and genre.

In Figs. 7A to 7H, a hand-like symbol h represents a key or button touched by a user. In Fig. 7A, if a keyword "Tsukuba" displayed in the keyword field 421 of the name tab 421a is selected (Yes in step 18), then as shown in Fig. 7B, the selected keyword "Tsukuba" is displayed in the Japanese kanji characters in the input character field 423 (step 19). The keywords are then narrowed down according to this selected keyword (step 15), and then the candidate destination points are narrowed down (step 16). In the input character field 423, in order to distinguish from unfixed characters in the middle of being input, the keywords and the fixed search strings are each displayed in an elliptic frame (keywords or search character string) or a rectangular frame (related keywords).

if "Tsukuba" is selected, a keyword "Tsukuba University" including "Tsukuba" and related keywords "center" and "gakuen" are displayed in the keyword field 421 as shown in Fig. 7B. The keywords and the related keywords displayed in the keyword field 421 are distinguishable, because each keyword is displayed in an elliptic frame while each related keyword is displayed in a rectangular frame.

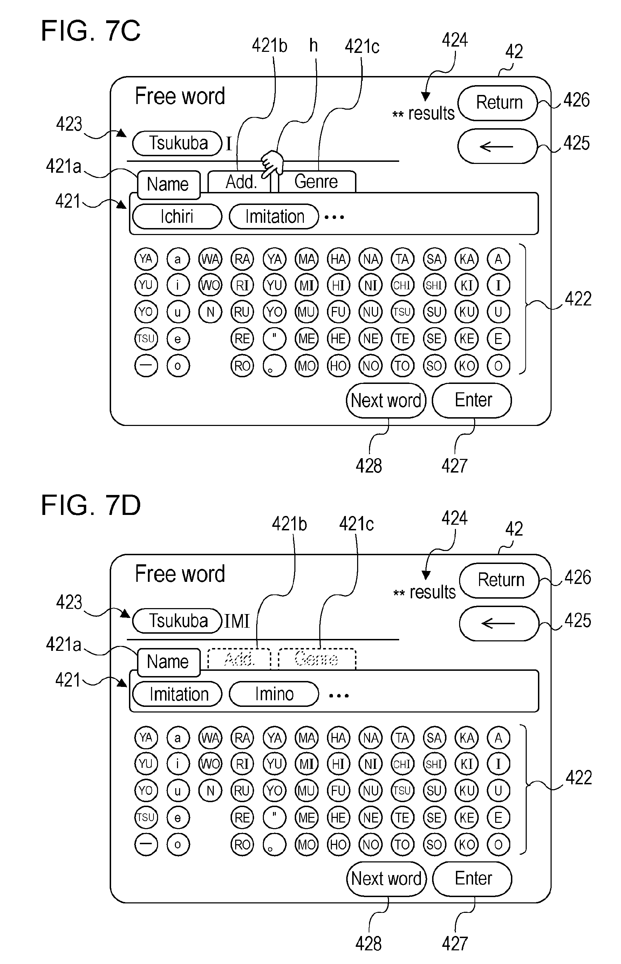

In the state shown in Fig. 7B, if a character "I" (actually a corresponding one of Japanese phonetic characters (kana characters)) is selected (No in step 18, No in step 20, and No in step 21), then as shown in Fig. 7C, the input character "I" is displayed in the input character field 423 (step 14). In this specific case, the keyword "Tsukuba" has already been selected and is displayed as an already-selected keyword in the input character field 423. Thus, the newly input character "I" is displayed at a position following the keyword "Tsukuba" in the input character field 423. Keywords partially matching the input character "I" are newly extracted for each of the search items, and extracted keywords "Ichiri", "imitation", etc. of the search item of name are displayed in the keyword field 421 of the name tab 421a because the name tab 421a is set to be in the highest level by default (Fig. 7C).

On the setting screen shown in Fig. 7C, if a character "MI" (actually, a corresponding one of Japanese kana characters) is further input, then the keywords obtained above as a result of the narrowing according to the input character "I" are further narrowed down according to an input character string "IMI" (step 15). In this specific example, as shown in Fig. 7D, keywords "imitation", "Imino", etc. are extracted for the search item of name and displayed in the keyword field 421, because the name tab 421a is in the highest level. On the other hand, no keywords including "IMI" are detected for the search items of address and genre, and thus the address tab 421b and the genre tab 421c are deleted.

On the setting screen shown in Fig. 7D, if not one of the keywords displayed in the keyword field 421 but the next word key 428 is selected (Yes in step 20), then the input characters "IMI" displayed in the input character field 423 are fixed as a complete search character string. The characters "IMI" displayed in an unenclosed manner in the input character field 423 are enclosed in an elliptic frame when they are fixed, in order to explicitly indicate that they have been fixed. The shape of the frame use for the above purpose is not limited to the ellipse, but other shapes may be used, or a particular color may be used.

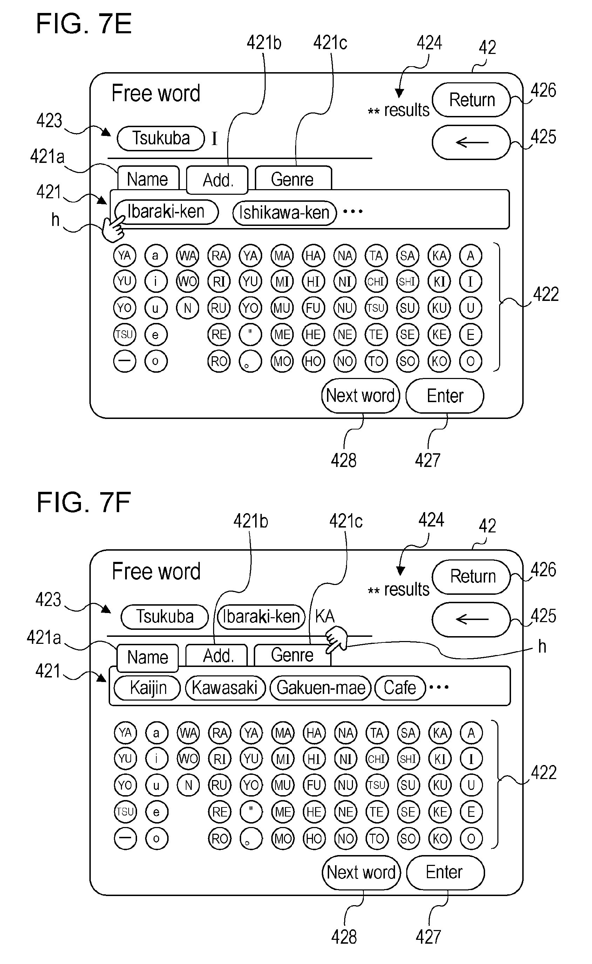

On the setting screen shown in Fig. 7C, if the address tab 421b is selected (touched) (Yes in step 175), then as shown in Fig. 7E, the selected address tab 421b is set to be in the highest level, and keywords associated with the address extracted as a result of the narrowing according to the input character "I" are displayed in the keyword field 421 (step 176).

Thereafter, on the setting screen shown in Fig. 7E, if "Ibaraki-ken" is selected as a keyword of the search item of address, and a next character "KA" (one of Japanese kana characters) is input, then, as shown in Fig. 7F, the keyword "Ibaraki-ken" is displayed next to the already selected keyword "Tsukuba" in the input character field 423, and the input character "KA" is displayed next to the keyword "Ibaraki-ken". Furthermore, as shown in Fig. 7F, keywords "Kaijin", "Kawasaki", "Gakuen-mae", "Cafe", etc. obtained as a result of the narrowing are displayed in the keyword field 421 of the name tab 421a being currently in the highest level.

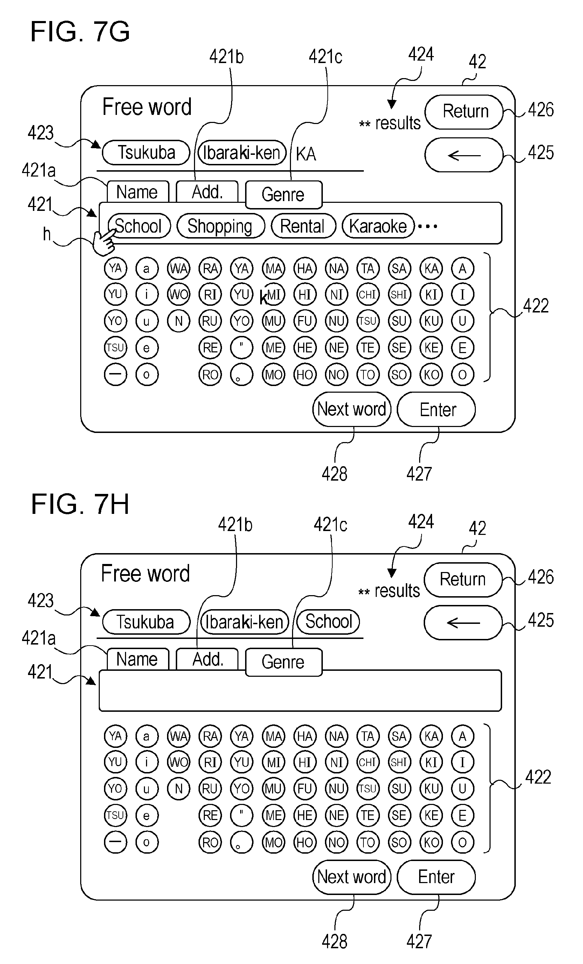

On the setting screen shown in Fig. 7F, if the genre tab 421c is selected, then as shown in Fig. 7G, the selected genre tab 421c is set to be in the highest level, and keywords "school", "shopping", "rental", "karaoke", etc. which have already been extracted for the search item of genre are displayed in the keyword field 421. In this state, if the keyword "school" is selected, then as shown in Fig. 7H, the selected keyword "school" is displayed in the input character field 423. In a case where when the keyword "school" is selected, if there are no keywords and no related keywords extracted via the narrowing based on the selected keyword "school", no keywords are displayed in the keyword field 421 as shown in Fig. 7H.

As shown in Fig. 7H, in a state in which a plurality of keywords are selected, if the enter key 427 is selected (Yes in step 21), the logical AND is determined for the candidate destination points narrowed according to the respective selected keywords thereby to determine the final candidate destination points included in all candidate destination point (step 22). On the setting screen shown in Fig. 7D being in the state in which the keyword "Tsukuba" has been selected, and characters "I" and "MI" have been input, if the enter key 427 is selected, then the input characters "IMI" are fixed as a complete search character string, as in the case where the next word key 428 is selected. Destination data included in the candidate destination points extracted for the keyword "Tsukuba" and the candidate destination points extracted for the fixed search character string "IMI" (note that the candidate destination points are extracted for all selected items) are determined as final candidate destination points.

Note that there can be various modifications to the embodiment described above. For example, although in the embodiment described above, keywords including an input character are used to make it possible to input a search character string in a highly efficient manner, it is not necessarily needed to use keywords. In the case where no keywords are used, step 15 and steps 17 to 19 in the destination setting process (Fig. 5) are not necessary. In this case, in step 16, destination data are narrowed down on the basis of the input character string (in an unfixed state) for each of the search items (name, address, and genre). Thereafter, as in the embodiment described above, the search character strings are fixed when the next word key 428 or the enter key 427 is selected. The narrowing is performed in step 16 each time a search character is input, and destination data included in any candidate destination points of each search item are extracted from the destination data stored in the RAM 24 and determined as candidate destination point for the fixed search character string. When the enter key 427 is pressed, destination data included for all search items are extracted (by the logical AND operation) and determined as final candidate destination points.

In the embodiment described above, keywords are displayed separately for each of the tabs 421a, 421b, and 421c corresponding to the respective search items, and a search item is selected when a keyword of the search item is selected. In the case where there is no keyword for a particular search item, the corresponding tab is deleted to explicitly indicate the fact that there is no keyword. In contrast, when no keywords are used, the destination setting screen may additionally include search item selection keys (a name key, an address key, and a genre key) for selecting the respective search items. The narrowing is sequentially performed each time a character is input separately for each of the search items. If no destination data is detected for a particular search item, a corresponding search item selection key is deleted to explicitly indicate the fact that there is no destination data.

In the embodiment described above, three search items, i.e., name, address, and genre are used. Alternatively, any two of them or four or more search items may be employed.

In the embodiment described above, keywords are stored in destination data. Alternatively, an ID may be assigned to each keyword in the keyword data file 58, and IDs may be stored in the destination data.

### Second Embodiment

In the first embodiment described above, it is assumed that the navigation apparatus is designed for use in Japan. More specifically, in the first embodiment, the input keyboard 422 is configured so as to include Japanese syllabary keys for inputting respective Japanese phonetic characters (kana characters), and data used in searching for destination points in Japan are stored in the destination data file 56. However, use of the navigation apparatus is not necessary limited to Japan. By properly modifying the input apparatus 41 and the data depending on an area, it becomes possible to use the input apparatus 41 in a country other than Japan.

Thus, in a second embodiment described below, by way of example, a navigation apparatus adapted to be used in the USA is disclosed. In this second embodiment of the navigation apparatus, the system configuration, the data format, and the destination setting process thereof are basically similar to those according to the first embodiment described above. Thus, in the second embodiment, similar parts to those in the first embodiment are denoted by similar reference numerals, and duplicated explanations thereof are omitted. That is, the following explanation will focus on differences.

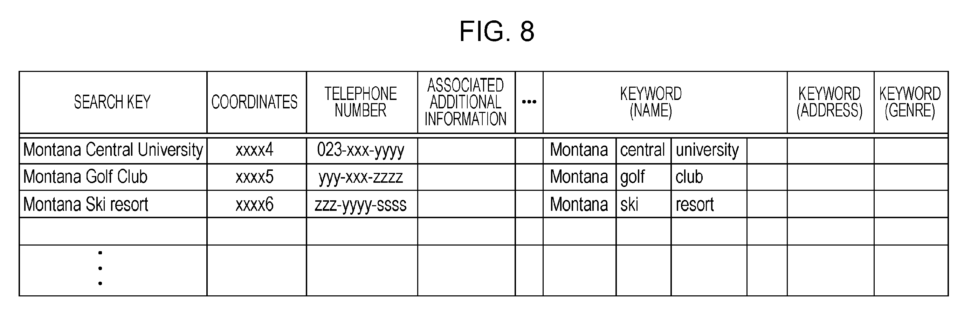

Fig. 8 is a diagram illustrating an example of content of destination data (location information) stored in the destination data file 56. As shown in Fig. 8, in the case of the navigation apparatus for use in the USA, names of destination data are directly registered as search keys. In the search keys for use in the USA, unlike those for use in Japan, words are delimited with a space. The "name" of a destination is used as a search key as described above, and the input apparatus (the alphabetic keys of the touch panel, in the present example) is adapted to input such a search key. The search key can be a mixture of uppercase and lowercase letters. However, differences in lower/upper case are neglected in the search. In the second embodiment, names of destination data in the USA are stored in the destination data file 56.

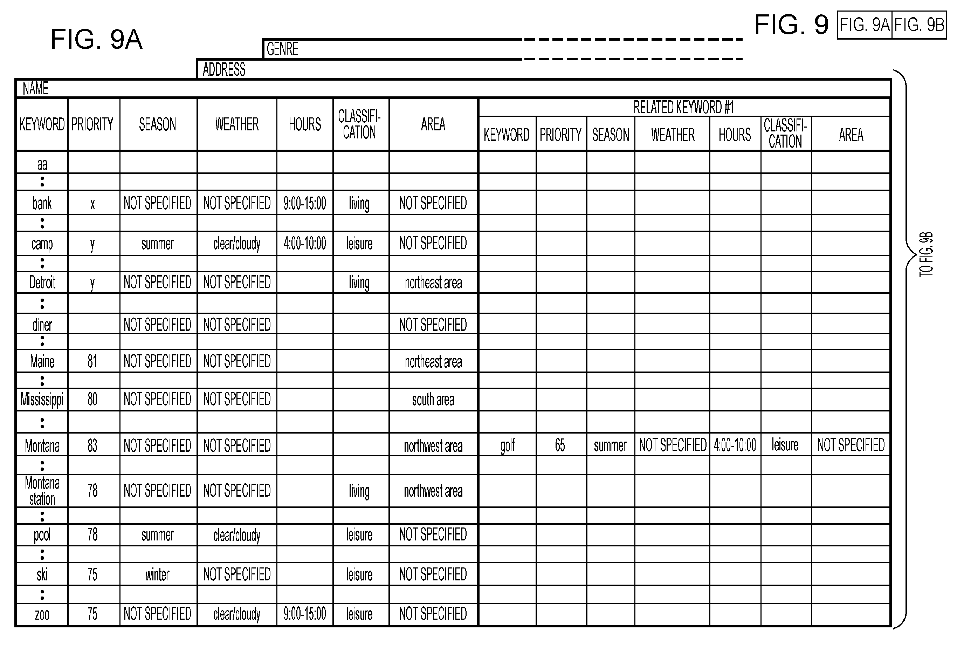

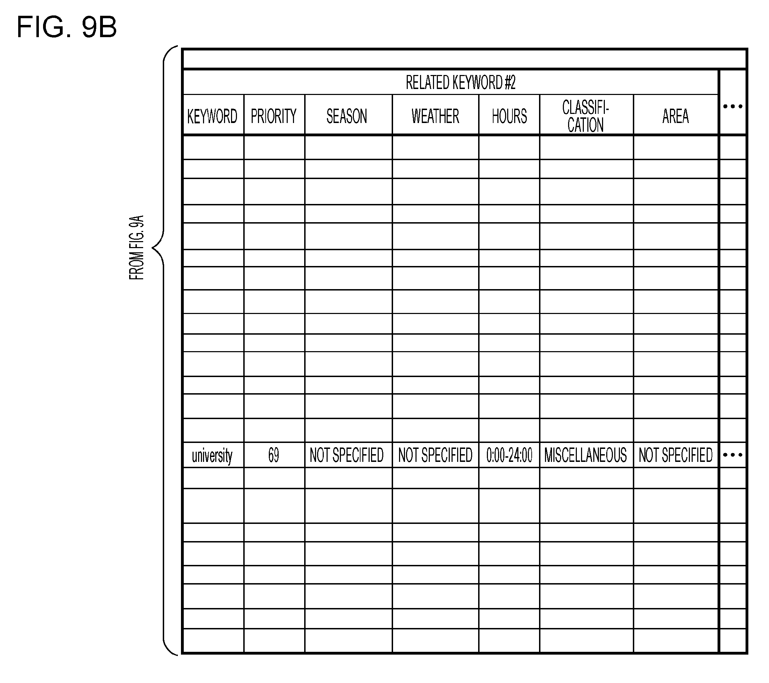

Fig. 9 shows examples of keywords stored in the keyword data file 58. Each keyword includes one or more words indicating a name of particular destination data. As shown in Fig. 9, also in the navigation apparatus designed for use in the USA as in the navigation apparatus according to the first embodiment, priority is defined for each keyword expressed in a string of alphabetic characters. For example, a candidate destination including a keyword "Montana" is assigned priority of "83", and the area thereof is defined as "northwest area". Therefore, if the current position is in the northwest area, a predetermined value (for example, 3) is added to the priority of 83, and thus the priority is changed to 86. For some keywords, related keywords are defined. A word having a high probability of being input together with a keyword is employed as a related keyword for this keyword. For example, when "golf" and "university" are part of the name of a destination having an assigned keyword "Montana", then "golf" and "university" are employed as related keywords.

In the keyword data file 58, available seasonal periods are defined depending on the country or the area in which the navigation apparatus is used. For example, the navigation apparatus is used in Japan, a period from Dec. to Feb. is defined as winter. On the other hand, in Australia located in the southern hemisphere, a period from Jun. to Aug. is defined as winter. Similarly, available time zones defined in the keyword data file 58 depend on the country or the area in which the navigation apparatus is used. For example, in countries or areas having a summer time system, available time zones are moved up by 1 hour during a summertime period.

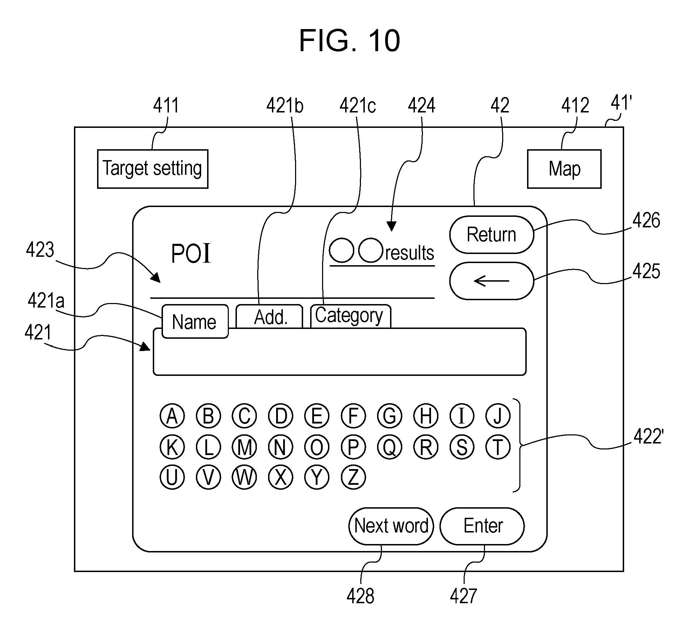

Fig. 10 is a schematic diagram illustrating an input apparatus 41' and a display 42 of a navigation apparatus designed for use in the USA. In Fig. 10 showing the navigation apparatus for use in the USA, similar parts to those of the navigation apparatus according to the first embodiment (Fig. 4) are denoted by similar reference numerals. As shown in Fig. 10, an input keyboard 422' includes a plurality of keys for inputting alphabetic characters A to Z.

In this navigation apparatus including the input apparatus 41' designed for use in the USA, the destination setting process and the process of displaying keywords in the form of keys are performed in a similar manner to the first embodiment described above (Figs. 5 and 6) except that in this second embodiment, an alphabetic character string is input using the input keyboard 422', and the destination data file 56 and the keyword data file 58 which are referred to in the process include data for use in the USA.

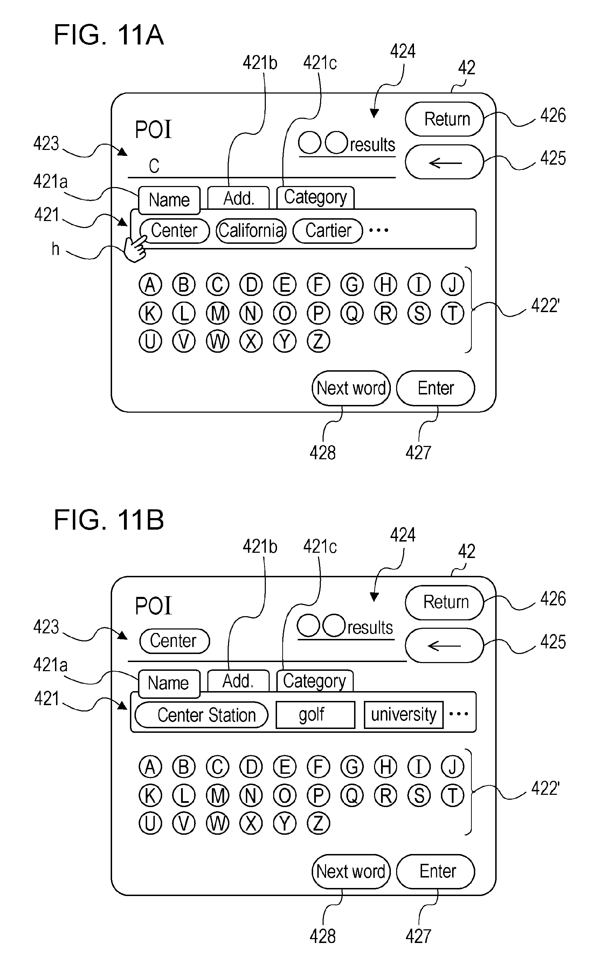

In the navigation apparatus adapted for use in the USA, the state of the display screen changes with the progress of the destination setting process, as described below with reference to Figs. 11A to 11H. On the destination setting screen shown in Fig. 10, if an alphabetic character "C" is input via an input keyboard 4221, then as shown in Fig. 11A, "C" is displayed in the input character field 423. The input character "C" is employed as a search character, and destination data are narrowed down according to the search character for each of the search items, name, address, and genre. The destination data are further narrowed down according to each keyword for each of the search items, and the keywords obtained as a result of the narrowing are displayed in the form of keys. In this specific example, the input character is a first input character, and thus the name tab 421a is set to be in the highest by default, and extracted keywords (names) "Center", "California", "Cartier", etc. are displayed in the keyword field 421 of the name tab 421a. Herein, it is assumed that there are keywords including, as part, the input character "C" for all search items of name, address, and genre.

In Figs. 11A to 11H, a hand-like symbol h represents a key or button touched by a user. As shown in Fig. 11A, if the keyword "Center" displayed in the keyword field 421 of the name tab 421a is selected, then as shown in Fig. 11B, the selected keyword "Center" is displayed in the input character field 423. The keywords are then narrowed down according to this selected keyword, and then the candidate destination points are narrowed down. If "Center" is selected, a keyword "Center Station" including "Center" and keywords "golf" and "university" related to "Center" are displayed in the keyword field 421 as shown in Fig. 11B.

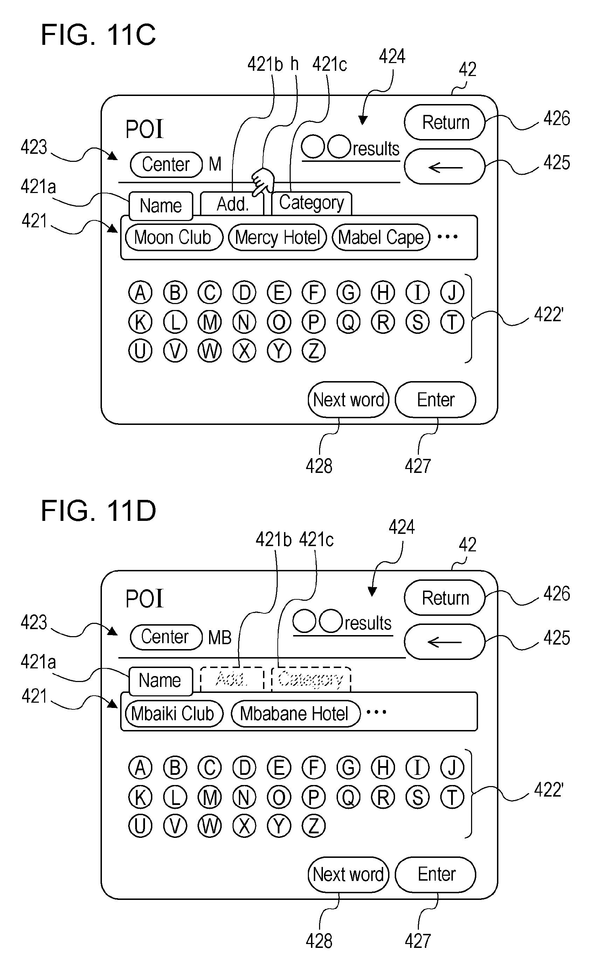

In the state shown in Fig. 11B, if a character "M" is further input, then as shown in Fig. 11C, the input character "M" is displayed in the input character field 423. In this specific case, the keyword "Center" has already been selected and is displayed as an already-selected keyword in the input character field 423. Thus, the newly input character "M" is displayed at a position following the keyword "Center" in the input character field 423. Keywords partially matching the input character "M" are newly extracted for each of the search items, and extracted keywords "Moon Club", "Mercy Hotel", (Mabel Cape", etc. of the search item of name are displayed in the keyword field 421 of the name tab 421a, because the name tab 421a is currently in the highest level.

On the setting screen shown in Fig. 11C, if a character "B" is further input, then the keywords obtained above as a result of the narrowing according to the input character "M" are further narrowed down according to a character string "MB". In this specific case, as shown in Fig. 11D, keywords "Mbaiki Club", "Mbabane Hotel", etc. are extracted for the search item of name and displayed in the keyword field 421. On the other hand, no keywords including "MB" are detected for the search items of address and genre, and thus the address tab 421b and the genre (category) tab 421c are deleted.

On the setting screen shown in Fig. 11D, if not one of the keywords displayed in the keyword field 421 but the next word key 428 is selected, then the input characters "MB" displayed in the input character field 423 are fixed as a complete search character string. The characters "MB" displayed in an unenclosed manner in the input character field 423 are enclosed in an elliptic frame when they are fixed, in order to explicitly indicate that they have been fixed. The shape of the frame use for the above purpose is not limited to the ellipse, but other shapes may be used, or a particular color may be used.

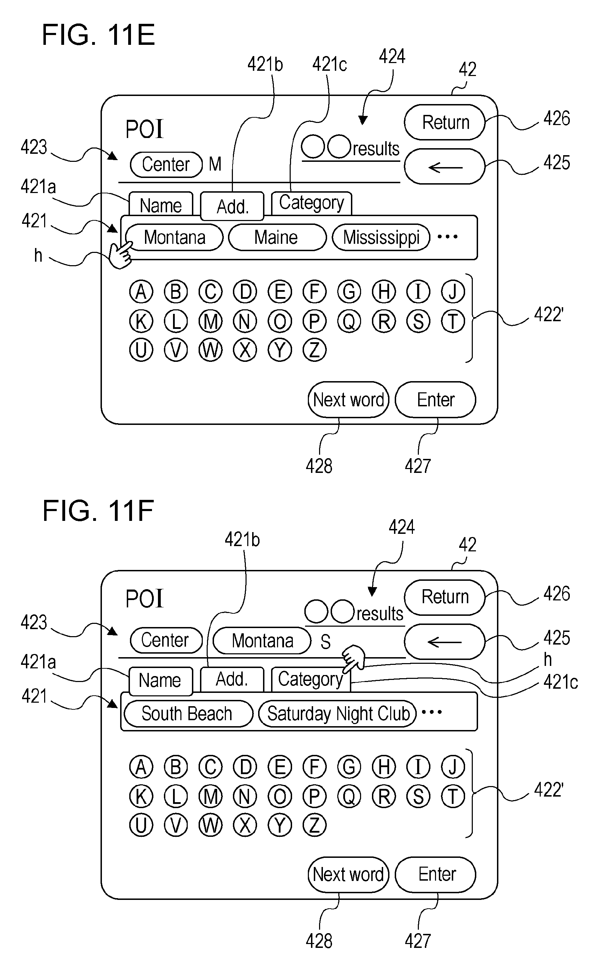

On the setting screen shown in Fig. 11C, if the address tab 421b is selected (touched), then as shown in Fig. 11E, the selected address tab 421b is set to be in the highest level, and keywords associated with the address extracted as a result of the narrowing according to the input character "M" are displayed in the keyword field 421. Thereafter, on the setting screen shown in Fig. 11E, if "Montana" is selected as a keyword of the search item of address, and a next character "S" is input, then, as shown in Fig. 11F, the keyword "Montana" is displayed next to the already selected keyword "Center" in the input character field 423, and the input character "S" is displayed next to the keyword "Montana". In this state, if the name tab 421a is selected, then as shown in Fig. 11F, keywords "South Beach", "Saturday Night Club", etc. obtained as a result of the narrowing are displayed in the keyword field 421 of the name tab 421a being currently in the highest level.

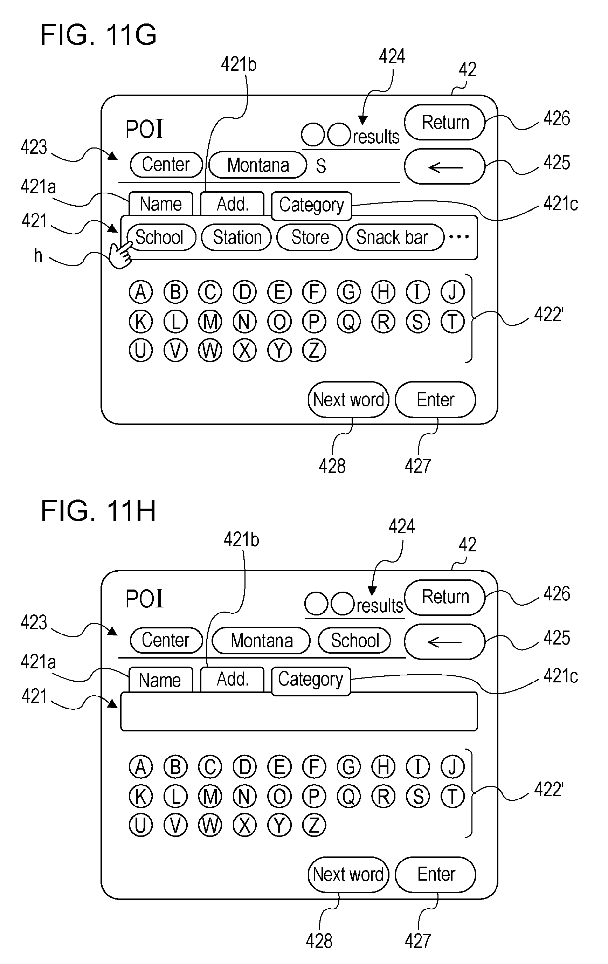

On the setting screen shown in Fig. 11F, if the genre (category) tab 421c is selected, then as shown in Fig. 11G, the selected genre (category) tab 421c is set to be in the highest level, and keywords "school", "station", "store", "snack bar", etc. which have already been extracted for the search item of genre are displayed in the keyword field 421. In this state, if the keyword "school" is selected, then as shown in Fig. 11H, the selected keyword "school" is displayed in the input character field 423. If there are no keywords and no related keywords extracted via the narrowing based on the selected keyword "school", no keywords are displayed in the keyword field 421 as shown in Fig. 11H.

As shown in Fig. 11H, in a state in which a plurality of keywords are selected, if the enter key 427 is selected, the logical AND is determined for the candidate destination points narrowed according to the respective selected keywords thereby to determine the final candidate destination points included in all candidate destination point On the setting screen shown in Fig. 11D being in the state in which the keyword "Center" has been selected, and characters "M" and "B" have been input, if the enter key 427 is selected, then the input characters "MB" are fixed as a complete search character string, as in the case where the next word key 428 is selected. Destination data included in the candidate destination points extracted for the keyword "Center" and the candidate destination points extracted for the fixed search character string "MB" (note that the candidate destination points are extracted for all selected items) are determined as final candidate destination points.

The manner of displaying a selected keyword in the input character field 423 may be changed depending on the tab (the search item) referred to when the keyword is selected. For example, keywords may be displayed in different colors depending on the tabs (search items) such that keywords selected from the name tab 421a are displayed in red, keywords selected from the address tab 421b are displayed in yellow, and keywords selected from the genre tab 421c are displayed in blue. The colors may be set in any desirable manner. The technique of changing colors in which keywords are displayed may be applied to the navigation apparatus for use in Japan according to the first embodiment. By changing the manner of displaying keywords depending on the tabs (search items), it becomes possible for a user to visually recognize the types of tabs from which keywords were selected, even after the keywords were selected.

Also in the navigation apparatus, for use in the USA, with the input character field 423 adapted to input an alphabetic character string, as with the navigation apparatus according to the first embodiment described above, the searching can be accomplished simply by inputting information a user thinks of in an arbitrary order with no concern for as to whether the information is of a name, genre, or address.

In the second embodiment described above, by way of example, the navigation apparatus is configured so as to include alphabet keys for inputting English words. However, the language is not limited to English, but the navigation apparatus may be configured so as to use various other languages such as German, Spanish, French, Arabic, Chinese, Korean, Russian, etc. For example, in the case of a navigation apparatus for use in China, the input apparatus 41 includes an input keyboard 422 adapted for inputting Chinese pinyin characters.

The language does not necessarily need to correspond to the country (area) where the navigation apparatus is used. For example, a navigation apparatus adapted to operate using German may be configured so as to be usable in France. In this case, the data stored in the destination data file 56 or the keyword data file 58 for use in the destination search, i.e. the data which are compared with the input character string (for example, the name of the destination, the keywords, the address, etc.) are described in the same language as the input language and in a format adapted to the input language. The data subjected to the search does not necessarily need to be described in the same language as the language spoken in the country (area) where the navigation apparatus is used. The data which are not subjected to the destination search, such as the appended information data, do not necessarily need to be described in the same language as the input language. That is, the data which are not subjected to the destination search may be described in the same language as the input language or may be described in the same language as the language spoken in the country (area) where the navigation apparatus is used, or may be described using both languages. The present invention has been described above with reference to particular embodiments by way of example but not limitation. It should be understood by those skilled in the art that various modifications and combinations may occur without departing from the spirit and scope of the invention as defined by the appended claims.
In a navigation apparatus, destination data are narrowed down in accordance with an input search character string, for each of a plurality of search items. The resultant destination data narrowed down for each search item are stored in association with each search character string. Destination data included in common for all search character strings are extracted by performing a logical AND operation, and resultant extracted destination data are displayed as candidate destination points. A user is allowed to input search character strings in an arbitrary order the user wants, without concern for whether the search character strings are of a name, a genre, or an address.

## Claims

1. A navigation apparatus comprising:
a destination data storage unit adapted to store a plurality of destination data each including data of a plurality of search items;
a character input unit for inputting a search character;
a first narrowing-down unit adapted to retrieve the search character input from the character input unit for each of the plurality of search items, and store destination data corresponding to the search character in association with each search item;
a second narrowing-down unit adapted to narrow down the destination data stored by the first narrowing-down unit in association with each search item, among the plurality of search items;
a display unit adapted to display the destination data narrowed down by the second narrowing-down unit as candidate destinations; and
a destination selection unit adapted to select one of the displayed candidate destinations.

2. The navigation apparatus according to claim 1, wherein
the first narrowing-down unit is adapted to perform the narrowing down for each search item each time a character is input as a part of a search character string, and wherein
the navigation apparatus further comprises an explicitly indicating unit adapted to explicitly indicate a search item for which there is no destination data to be narrowed down for the search character string by the first narrowing-down unit.

3. The navigation apparatus according to claim 2, further comprising
a search item selection unit adapted to select a search item, wherein
if a search item is selected for the search character string, the first narrowing-down unit is adapted to narrow down the destination data within the range of the selected search item, and
the explicitly indicating unit is adapted to explicitly indicate a search item for which there is no destination data to be narrowed down, by disabling the selection of this search item.

4. The navigation apparatus according to claim 1, further comprising
a search item selection unit adapted to select a search item, wherein
if a search item is selected for the search character string, the first narrowing-down unit is adapted to narrow down the destination data within the range of the selected search item.

5. The navigation apparatus according to claim 1, further comprising
a keyword storage unit adapted to store a plurality of keywords in association with each of the plurality of search items,
a keyword display unit adapted to extract keywords including the input search character string from the keywords stored in the keyword storage unit, for each of the plurality of search items, and display the resultant extracted keywords, and
a keyword selection unit adapted to select one of the displayed keywords, wherein
the destination data storage unit is adapted to store a plurality of destination data including destination data to which one or more keywords are assigned for each search item, and
if a keyword is selected, the first narrowing-down unit is adapted to narrow down the destination data to obtain destination data including the selected keyword.

6. The navigation apparatus according to claim 5, wherein
the keyword display unit is adapted to narrow down the keywords for each search item each time a character is input as a part of a search character string, and wherein
the navigation apparatus further comprises a second explicitly indicating unit adapted to explicitly indicate a search item for which there is no keyword to be narrowed down for the search character string.

7. The navigation apparatus according to claim 6, further comprising
a search item selection unit adapted to select a search item, wherein
the keyword display unit is adapted to display keywords corresponding to the selected search item.

8. The navigation apparatus according to claim 7, wherein the second explicitly indicating unit is adapted to explicitly indicate a search item for which there is no keyword to be narrowed down by changing a state of the search item selection unit in terms of displaying the search item.

9. The navigation apparatus according to claim 5, wherein each keyword stored in the keyword storage unit is a word included in expressions of the plurality of destination data.

10. The navigation apparatus according to one of claims 5 to 9, wherein the keywords are produced at least for two of items of a name, an address, and a genre, corresponding to contents of the destination data.

11. A navigation method comprising the steps of:
storing a plurality of destination data each including data of a plurality of search items;
inputting a search character;
retrieving the search character input for each of the plurality of search items, and storing destination data corresponding to the search character in association with each search item;
narrowing down the destination data stored in association with each search item among the plurality of search items;
displaying the destination data narrowed down as candidate destinations; and
selecting one of the displayed candidate destinations.

12. The navigation method according to claim 11, wherein
the retrieving is adapted to perform narrowing down for each search item each time a character is input as a part of a search character string, and wherein
the navigation method further comprises a step of explicitly indicating a search item for which there is no destination data to be narrowed down for the search character string.

13. The navigation method according to claim 12, further comprising
selecting a search item, wherein
if a search item is selected for the search character string, the retrieving is adapted to perform narrowing down of the destination data within the range of the selected search item, and
the explicitly indicating is adapted to explicitly indicate a search item for which there is no destination data to be narrowed down, by disabling the selection of this search item.

14. The navigation method according to claim 11, further comprising
selecting a search item, wherein
if a search item is selected for the search character string, the retrieving is adapted to narrow down the destination data within the range of the selected search item.

15. The navigation method according to claim 11, further comprising
storing a plurality of keywords in association with each of the plurality of search items,
extracting keywords including the input search character string from the keywords stored, for each of the plurality of search items, and displaying the resultant extracted keywords, and
selecting one of the displayed keywords, wherein a plurality of destination data including destination data to which one or more keywords are assigned for each search item are stored, and
if a keyword is selected, the retrieving is adapted to narrow down the destination data to obtain destination data including the selected keyword.

16. A computer program product for a computer, comprising software code portions for performing the steps of any one of claims 11 to 15, when the program is run on the computer.
